# EUROPÄISCHE PATENTSCHRIFT

(11) **EP 2 561 225 B1**
(45) Veröffentlichungstag und Bekanntmachung des Hinweises auf die Patenterteilung: **26.03.2014**
(21) Anmeldenummer: 11726654.4
(22) Anmeldetag: 25.02.2011
(51) Int. Cl.: F03D 11/04

(54) **STANDSTRUKTUR**
STAND STRUCTURE
STRUCTURE VERTICALE

(30) Priorität: 18.04.2010 DE 102010015761
(43) Veröffentlichungstag der Anmeldung: 27.02.2013
(73) Patentinhaber: Alfred-Wegener-Institut Helmholtz-Zentrum für Polar- und Meeresforschung, 27570 Bremerhaven (DE)
(72) Erfinder: HAMM-DUBISCHAR, Christian, 27580 Bremerhaven (DE)
(86) Internationale Anmeldenummer: PCT/DE2011/000227
(87) Internationale Veröffentlichungsnummer: WO 2011/131160

(56) Entgegenhaltungen:
- GB-A- 2 136 860
- GB-A- 2 309 246

## Beschreibung

Die Erfindung bezieht sich auf eine Standstruktur auf einem Untergrund mit einem vertikal ausgerichteten, nicht mit dem Untergrund verbundenen Zentralpfeiler mit einer oberen Auflagerfläche für eine Konstruktion, zumindest drei um den Zentralpfeiler herum mit dem Untergrund verbundenen Fußelementen und pro Fußelement mit zumindest je einer oberen Radialstrebe und einer unteren Radialstrebe mit jeweils einer Längsachse und einer oberen Anbindung an den Zentralpfeiler und einer unteren Anbindung an das Fußelement.

Standstrukturen können auf ihrer Auflagerfläche in Abhängigkeit von ihren Abmaßen große als auch kleine Konstruktionen tragen. Standstrukturen für große Konstruktionen, beispielsweise technische Bauten, in der Ausführungsform von Gründungsstrukturen, Tragwerken oder Aufständerungen werden in verschiedenen Anwendungen benötigt, beispielsweise zum Tragen von Energieanlagen, beispielsweise Offshore-Windenergieanlagen, Umspannwerken, beispielsweise in Form von aufgeständerten Trafostationen und Kabelknotenpunkten in Windenergieparks, Vorratsbehältern, Arbeitsplattformen, Signaleinrichtungen, Kränen, Türmen oder Masten. Je nach Anwendungsfall können die großen Standstrukturen auf dem Festland oder im Wasser auf dem Gewässerboden als Untergrund angeordnet sein. Bei einer Anordnung im Wasser können sie sich vollständig unter Wasser befinden oder auch teilweise (dauerhaft oder zeitweise) aus dem Wasser herausragen. Je nach Anwendungsfall können sie auch aus unterschiedlichen Materialien, beispielsweise Metall, Kunststoff oder Beton, mit ausschließlichem Einsatz oder auch aus einem Verbundmaterial, beispielsweise einem Faserverbund, oder einem Hybridmaterial, beispielsweise einer Kombination von Stahl mit Beton oder Kunststoff, bestehen und stark unterschiedliche Abmessungen aufweisen, wobei das Material und die Abmessungen an die herrschenden Druck- und Zugkräfte in der Standstruktur angepasst sind. Standstrukturen mit kleineren Abmaßen können auf einem einfachen festen, ebenen Untergrund angeordnet sein, beispielsweise aus Holz, Glas oder Metall, und sind bekannt beispielsweise in der Unterhaltungselektronik für Bildschirme, Fernseher, Computer, Lautsprecher und Musikinstrumente.

Eine Hauptanwendung für die beanspruchte Standstruktur in einer großen Dimensionierung besteht in der Verwendung als Gründungsstruktur für eine Offshore-Windenergieanlage (OWEA). Dabei trägt die Standstruktur mit ihrer oberen Auflagerfläche den Turm der OWEA. Der Hauptanteil bei den erneuerbaren Energien für eine Stromerzeugung besteht derzeit zu mehr als 40% aus Windenergie. Die Entwicklung von Windkraftanlagen schreitet schnell voran. Die Turmhöhen stiegen von 30 m auf 120 m, die Rotordurchmesser von 15 m auf 127 m. In den neu erschlossenen Höhen mit angestiegenen Windgeschwindigkeiten und vergrößerten Rotoren können Anlagen derzeit bis zu 6 MW Generatorleistung liefern. Die größeren Anlagen werden hauptsächlich als Offshore-Windenergieanlagen betrieben, da vor den Küsten genügend Stellplätze in unbewohnter Umgebung vorhanden und die Windgeschwindigkeiten noch höher sind. In Offshore-Gebieten herrschen aber gegenüber einer Landaufstellung grundsätzlich andere Verhältnisse, neben starken Windkräften treten vor allem auch starke Wellenkräfte auf. Es müssen für OWEA daher Anpassungen auch für die Standstrukturen gefunden werden, um den enormen Lasten standhalten zu können. Weiterhin ist bei Offshore-Gründungen aus Umweltschutzgründen bereits bei der Wahl der Gründungsart auf den kompletten Rückbau der Anlage nach deren Außerbetriebnahme zu achten. Es müssen dabei alle Teile der Anlage bis auf eine Tiefe von ca. 2-4 m unterhalb des Meeresbodens entfernt werden. Die Art der Gründungen von OWEAs ist sehr stark von der Wassertiefe, der Beschaffenheit des Meeresbodens und den Umweltbedingungen wie Strömungen, Tidenhub, Wellen, Eisgang etc. abhängig. Für Wassertiefen bis ca. 30 m werden Monopiles, Schwerkraft- und Saugrohrgründungen sowie Tripod- und Gerüst-Strukturen unterschieden. Bei letzteren werden mehrere kleine Rohre in den Boden gerammt. Darauf wird eine räumliche Fachwerkstruktur (Jackett) aus einer Rohrkonstruktion gesetzt, die den eigentlichen Turm der OWEA trägt. Der Turmanschluss liegt in der Regel unterhalb der Wasseroberfläche, um die Wellen- und eventuellen Eisbelastungen gering zu halten. Tripod- und Jackett-Strukturen haben gegenüber Monopiles die Vorteile, dass sie auch bei größeren Wassertiefen einsetzbar sind, keine Vorbereitungen des Meeresbodens benötigen und relativ große Biegesteifigkeiten und Schwingungs-Eigenfrequenzen erreichen. Dem gegenüber stehen die hohen Kosten für den Einsatz offshore-tauglicher Stahlrohre (hauptsächlich Korrosionsschutz) und für deren Transport und Montage, die u.a. mit den großen Massen und verwendeten Strukturen assoziiert sind.

### STAND DER TECHNIK

Aus der GB 2 419 150 A ist eine Standstruktur in Fachwerkausführung, insbesondere für eine Offshore-Windenergieanlage, bekannt, die aus einem vertikal ausgerichteten Zentralpfeiler besteht, der jedoch auf dem Untergrund gegründet ist, d.h. Kraft in den Untergrund einleitet. Neben der Gewichtskraft vom Turm und der Generatorgondel der OWEA treten auch noch Wind- und Wasserkräfte (Wellen, Strömung, Tiede) auf, die auf die Standstruktur einwirken. Gleichmäßig um den Zentralpfeiler herum sind drei Fußelemente auf einem Umfangskreis gegründet. Das Gewicht der Standstruktur wird also sowohl über den Zentralpfeiler als auch die Fußelemente in den Untergrund eingeleitet. Zur Verbindung mit dem Zentralpfeiler sind pro Fußelement eine obere Radialstrebe und eine untere Radialstrebe vorgesehen, wobei die Bezeichnung "Radialstrebe" aus deren Orientierung in Richtung des Radius des Umfangkreises abgeleitet wird. Der Aufbau der Standstruktur ist rotationssymmetrisch, d.h. alle oberen und unteren Radialstreben binden mit ihren oberen Anbindungen jeweils in derselben Radialebene an den Zentralpfeiler an. Jeweils eine obere und untere Radialstrebe liegen in einer gemeinsamen Axialebene durch das jeweilige Fußelement, werden also durch das Fußelement einander zugeordnet. Die zentralen Längsachsen der bekannten Radialstreben weisen einen linearen Verlauf auf. Dabei verlaufen die oberen Radialstreben schräg, die unteren Radialstreben verlaufen horizontal. Im Lastfall ergeben sich starke Kerbspannungen im Verbindungsbereich der geradlinig unter einem spitzen Winkel verlaufenden oberen Radialstreben mit dem Zentralpfeiler, die zu Beeinträchtigungen führen können. Ein Anbindungsring mit speziell ausgeformten Übergängen soll Abhilfe bieten.

Aus der EP 2 036 813 B1 ist eine gattungsgemäße Standstruktur mit oberen und unteren Radialstreben bekannt, von der die Erfindung als nächstliegendem Stand der Technik ausgeht. Im Unterschied zu der zuvor beschriebenen Standstruktur ist bei dieser Standstruktur der Zentralpfeiler nicht gegründet, sodass alle auftretenden Kräfte über die gegründeten Fußelemente in den Boden eingeleitet werden. Der rotationssymmetrische Aufbau und die Anordnung von oberen und unteren Radialstreben pro Fußelement in einer gemeinsamen Axialebene ist identisch. Ebenfalls weisen die oberen Radialstreben über ihre gesamte Länge einen linearen Verlauf ihrer zentralen Längsachsen auf. Dabei verlaufen die oberen Radialstreben wiederum mit einer starken Neigung und schließen unter einem spitzen Winkel an den Zentralpfeiler an. Um Beeinträchtigungen der oberen Anbindung der oberen Radialstreben an den Zentralpfeiler durch auftretende Kerbkräfte zu verhindern und gleichzeitig die Masse der Standstruktur und damit ihre Erstellungskosten zu verringern, haben der Zentralpfeiler und die oberen Radialstreben bei dieser Standstruktur einen konischen Verlauf ihrer Außenkontur mit dem größten Querschnitt an den oberen Verbindungsstellen. An Stellen geringerer Belastung sind die Querschnitte entsprechend kleiner.

Aus der EP 2 072 685 A1 ist ein Übergangsstück zwischen einem Fachwerkgerüst mit einer Vielzahl von geraden Streben und dem Turm einer Windenergieanlage bekannt. Dabei zeigt das Übergangsstück in seiner Außenkontur einen leicht gebogenen Verlauf. Dieser dient jedoch der Größenanpassung des Turms an das Fachwerkgerüst. Vorteil des Übergangsstücks ist seine Teilung in identische Teilstücke in Form von beispielsweise Viertelschalen, die durch einfache vertikale Schweißnähte in einer Vorortmontage miteinander verbunden werden können. Aus der EP 2 067 915 A2 ist für eine Gitterstruktur für ein Offshore-Bauwerk ein Fußknotenteil bekannt, dass als Gussstück einen gebogenen Übergang zwischen einem Gründungspfahl und den Säulenstreben ermöglicht.

Aus der DE 10310 708 A1 ist eine Standstruktur nach Fachwerkart mit einem Zentralpfeiler und ausschließlich oberen, geradlinig verlaufenden Radialstreben bekannt, die unter einem sehr spitzen Winkel an den Zentralpfeiler anschließen. Zur Stabilisierung der oberen Radialstreben beim Transport der Standstruktur sind im oberen Bereich der Radialstreben Stabilisierungselemente vorgesehen, die jeweils an den Radialstreben anbinden und einander zwischen den Radialstreben überkreuzen.

Aus der EP 1 270 848 A1 ist eine nachgiebige Seilabspannung für Wasserbauwerke bekannt, die jedoch außen am Bauwerk angebracht ist und das Bauwerk gegen übermäßige Biegungen unter Last abstützen soll. Weiterhin ist noch aus der DE 10316 405 A1 eine Standstruktur nach Fachwerkart in käfigartiger Ausbildung bekannt, die einen Zentralpfeiler aufweist, der mit Ringen in unterschiedlichen Höhen anstelle von Radialstreben stabilisiert wird. Dazu werden die Ringe nach oben und nach unten durch Zugseile aus Stahl speichenartig gegeneinander verspannt. Ein Teil der Seile ist am Zentralpfeiler angebunden und verläuft schräg dazu, ein anderer Teil verläuft zwischen den Ringen parallel zum Zentralpfeiler. Der Zentralpfeiler ist über ein zentrales Fußelement im Untergrund gegründet und leitet die Hauptkräfte in den Boden ein.

Schließlich ist aus der DE 35 09 721 A1 eine Gerüststruktur zur Aufständerung eines Pavillondaches bekannt, die aus Stabilitätsgründen in ihrem Verlauf der zentralen Längsachse nach außen gebogene Querstreben aufweist. Diese Querstreben bestehen aus mehreren, flachwinklig aneinander gefügten Rohrabschnitten und sind jedoch horizontal verbaut.

### AUFGABENSTELLUNG

Ausgehend von der oben beschriebenen, gattungsgemäßen Standstruktur ist die AUFGABE für die vorliegende Erfindung darin zu sehen, die Stabilität, insbesondere im Hinblick auf wirkende Kerbkräfte, der Standstruktur weiter zu verbessern und gleichzeitig die Herstellungskosten für die Standstruktur, insbesondere aufgrund des Materialeinsatzes, weiter zu senken. Die erfindungsgemäße LÖSUNG für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Die beanspruchte Standstruktur weist erfindungsgemäß einen an der oberen Anbindung der oberen Radialstreben an den Zentralpfeiler beginnenden, konvex gebogenen Verlauf der Längsachse der oberen Radialstreben über deren gesamte Länge auf. Auftretende Kräfte an der oberen Anbindung der oberen Radialstrebe zum Zentralpfeiler werden wesentlich verringert, da die oberen Radialstreben über ihre Vorwölbung Kräfte aufnehmen können. Es ergibt sich dann eine kompensierende vertikale Verschiebung der oberen Anbindung der oberen Radialstreben. Dabei bedeutet ein konvex gebogener Verlauf, dass sich die Längsachse vom Zentralpfeiler bis auf einen maximalen Abstand entfernt. Um bei der Kraftaufnahme ein Ausknicken der gewölbten oberen Radialstreben sicher zu vermeiden, ist weiterhin erfindungsgemäß bei der beanspruchten Standstruktur zumindest ein Zugelement für jede obere Radialstrebe angeordnet, das mit einer äußeren Anbindung an die obere Radialstrebe und einer inneren Anbindung an den Zentralpfeiler oder die zugehörige untere Radialstrebe angebunden ist. Dabei sind die Zugelemente konstruktiv so angeordnet und dimensioniert, dass sie auftretende Ausknickkräfte in den oberen Radialstreben aufgrund von mehrachsigen Kraft- und Momenteneinleitungen in die Standstruktur sicher kompensieren können. Es wird eine vertikale Verschiebung der oberen Anbindung der oberen Radialstreben nur in einem vorgegebenen Maß zugelassen. Durch den gebogenen Verlauf der oberen Radialstützen weist die erfindungsgemäße Standstruktur weiterhin im Bereich der oberen Anbindung eine wesentlich ausladendere, raumgreifendere Form auf als bekannte Standstrukturen. Der größere umbaute Raum bietet eine wesentlich verbesserte Stabilität gegenüber Kraftangriffen über den Turm der OWEA. Durch einen nahezu waagerechten Übergang zwischen dem Zentralpfeiler und den oberen Radialstreben ergibt sich eine große horizontale Auflagerfläche, in der die Auflagerkräfte gut verteilt werden können. Dabei kann diese Auflagerfläche bei der Standstruktur nach der Erfindung sogar oberhalb des Wasserspiegels liegen. Die Standstruktur nach der Erfindung kann damit auch in Gebieten mit starkem Tiedenhub mit einer zumindest temporären Freilegung aufgebaut werden. Gleichzeitig erweist sich die erfindungsgemäße Standstruktur aber als besonders Material und damit Kosten sparende Leichtbaustruktur höchster Stabilität und Zuverlässigkeit. Gegenüber bekannten Standstrukturen in Fachwerkausführung ist bei gleichem Lastfall eine Materialeinsparung von bis zu 50% realisierbar.

Die Stabilitätsvorteile zeigen sich auch bei dem Naturvorbild der Radiolarienart *Clathrocorys.* Bei diesem als Plankton im Meer vorkommenden Strahlentierchen handelt es sich um ein einzelliges, eukaryotisches Lebewesen mit einem kugeligen oder mützenförmigen Endoskelett aus Siliziumdioxid. Radiolarien haben radial abstehende Cytoplasma-Fortsätze, die von innen mit dünnen, starren Stacheln aus Siliziumdioxid gestützt werden. Diese gehen strahlenförmig von einem ebenfalls aus Siliziumdioxid bestehenden Endoskelett aus, das aus einer sphärischen, durchlöcherten Kapsel oder mehreren konzentrisch angeordneten derartigen Kapseln besteht. Die Fortsätze dienen dem Schweben im Wasser und dem Schutz vor Fressfeinden. *Clathrocorys* wurde für die vorliegende Erfindung durch die Anwendung eines Verfahrens zur Ermittlung von konstruktiven Erstmodelldaten für eine technische Leichtbaustruktur als besonders geeignet ausgewählt (vergleiche DE 103 56 682 A1, bionisches Leichtbau- und Optimierungsverfahren "Evolutionary Light Structure Engineering" ELiSE^{®}) und in ihrer Grundstruktur nach der Evolutionsstrategie optimiert und anschließend in eine technische Konstruktion konvertiert (eine weitere nutzbare Radiolariensorte ist *Callimitra;* es existieren aber weitere Mikroorganismen mit einem großen Potenzial als mögliches Vorbild für eine Stand- bzw. Gründungsstruktur). Mit diesem Verfahren können verschiedenste Geometrien aus der Natur auf Gebrauchsgegenstände aller Art und Größe des täglichen Lebens einfach übertragen und angepasst werden.

Die besondere Stabilität und Leichtigkeit bei gleichzeitig erhöhtem oberem Raumumfang ergibt sich bei der erfindungsgemäßen Standstruktur durch die konvexe Biegung der oberen Radialstreben ab deren oberer Anbindung an den Zentralpfeiler. Die obere Radialstrebe entfernt sich zunächst vom Zentralpfeiler. Dies kann sie entweder bis zu ihrer unteren Anbindung immer weiter tun, sodass sich eine geöffnete Form der oberen Radialstreben ergibt. Die obere Radialstrebe kann sich nach Erreichen eines maximalen Abstands, beispielsweise in der Mitte oder im Bereich der Mitte des Zentralpfeilers zwischen den oberen Anbindungen der oberen Radialstreben und den oberen Anbindungen der unteren Radialstreben, dem Zentralpfeiler aber auch wieder nähern, sodass sich die Öffnungswinkel der Form wieder schließt, oder ab der Mitte weiter parallel dazu verlaufen, sodass der Öffnungswinkel der Form konstant bleibt. Es ergibt sich somit ein symmetrischer oder unsymmetrischer konvex gebogener Verlauf der zentralen Längsachse der oberen Radialstreben zur Mitte des Zentralpfeilers zwischen den oberen Anbindungen der oberen Radialstreben und den oberen Anbindungen der unteren Radialstreben. Vorteilhaft ist es daher bei der Standstruktur nach der Erfindung, wenn sich der konvex gebogene Verlauf der zentralen Längsachse der oberen Radialstreben zumindest bis zu deren Mitte erstreckt. Der im Betriebsfall vorgegebene konkrete konvex gebogene Verlauf der oberen Radialstreben hängt vom maximalen Lastfall und den konstruktiven Gegebenheiten ab.

Ebenfalls In Abhängigkeit vom maximalen Lastfall für die erfindungsgemäße Standstruktur sind verschiedene konstruktive Parameter entsprechend variierbar. Ein wesentlicher Parameter ist der Radius des Umfangkreises, auf dem die Fußelemente angeordnet sind. Weiterhin handelt es sich neben den Längen, Querschnitten und Materialien des Zentralpfeiler, der Radialstreben und der Zugelemente, die bei der erfindungsgemäßen Standstruktur der sicheren Vermeidung der Ausknickung der oberen Radialstreben im Lastfall dienen, insbesondere auch bei der Anzahl und Anordnung der Zugelemente an die Radialstreben und an den Zentralpfeiler um relevante konstruktive Parameter. Besonders vorteilhaft ist es deshalb, wenn zumindest ein oberes und ein unteres Zugelement für jede Radialstrebe angeordnet sind. Dabei ist das obere Zugelement vorteilhaft mit seiner äußeren Anbindung oberhalb der Mitte der oberen Radialstrebe und seiner inneren Anbindung oberhalb der Mitte des Zentralpfeilers zwischen den oberen Anbindungen der oberen Radialstrebe und der unteren Radialstrebe angeordnet. Das untere Zugelement ist vorteilhaft mit seiner äußeren Anbindung unterhalb der Mitte der oberen Radialstrebe und seiner inneren Anbindung im Mittenbereich der zugehörigen unteren Radialstrebe, also derjenigen Radialstrebe, die an dasselbe Fußelement wie die obere Radialstrebe anbindet, verbunden. Mit nur zwei Zugelementen pro obere Radialstrebe ergibt sich bereits eine gegenüber Krafteinwirkungen äußerst stabile und trotzdem leichtgewichtige Konstruktion. Gemäß einer nächsten Ausführungsform der Erfindung kann weiterhin vorteilhaft vorgesehen sein, dass die obere Anbindung der unteren Radialstrebe an den Zentralpfeiler in einer Höhe von einem Drittel bis zur Hälfte der Höhe der oberen Anbindung der oberen Radialstrebe über dem Untergrund vorgesehen ist. Dadurch verlaufen auch die unteren Radialstreben und einem relativ großen Winkel zum Zentralpfeiler. Bei drei unteren Radialpfeilern bildet sich ein Tetraeder mit einer steilen Spitze. Durch die relativ große Höhe der unteren Anbindung der unteren Radialstreben an den Zentralpfeiler ergibt sich gegenüber bekannten Standstrukturen entweder ein kleinerer Umfangkreis für die Fußelemente oder bei längeren unteren Radialstreben eine größere Baufreiheit unterhalb des Zentralpfeilers, sodass auch Aufstellungen auf gewölbten, zerklüfteten und steinigen oder auch anderweitig besetzten Untergründen realisiert werden können.

Individuell sind bei der Erfindung so viele Zugelemente an solchen Anbindungsorten mit einem solchen geneigten Verlauf einzusetzen, dass auftretende Knickkräfte sicher kompensiert sind und ein Ausknicken der oberen Radialstreben unter allen Umständen vermieden ist. Bei der Standstruktur nach der Erfindung können somit auch mehr als zwei Zugelemente pro Radialstrebe vorgesehen sein. Beispielsweise können zwei obere Zugelemente, die beide an den Zentralpfeiler binden, vorgesehen sein. Es können parallele Zugstreben genauso vorgesehen sein, wie Zugstreben mit übereinstimmender innerer oder äußerer Anbindung. Es können auch zwei oder mehr untere Zugelemente vorgesehen sein, die zwischen der oberen Radialstreben und der zugehörigen unteren Radialstrebe angeordnet sind. Zur weiteren Stabilisierung der Standstruktur können weiterhin auch vorteilhaft zusätzliche horizontale Zugelemente mit beiden Anbindungen zwischen den oberen Radialstreben oberhalb deren Mitte vorgesehen sein. Diese horizontalen Zugelemente binden nicht den Zentralpfeiler mit ein, sondern stabilisieren die oberen Zugstreben untereinander. Alle Zugelemente können auch gleichmäßig über die Höhe des Zentralpfeilers zwischen den oberen Anbindungen der oberen und der unteren Radialstreben verteilt und winklig oder horizontal angeordnet sein, wobei je nach Anordnung die Anbindungsorte der Zugelemente an den Zentralpfeiler und an die oberen und unteren Radialstreben entsprechend angeordnet sind. Dabei können insbesondere die Zugelemente je nach Lastfall und Aufstellungsort der Standstruktur auch unsymmetrisch angeordnet sein.

Bei der Erfindung hat sich die Anordnung von genau einer oberen und einer unteren Radialstrebe in einer gemeinsamen Axialebene durch ein Fußelement als vorteilhaft erwiesen. Weiterhin können bei der Standstruktur nach der Erfindung zur weiteren Verbesserung von deren Stabilität nach Maßgabe von Last- und Konstruktionsanforderungen vorteilhaft auch mehr als drei obere und/oder untere Radialstreben insgesamt und/oder mehrere obere und/oder untere Radialstreben pro Fußelement vorgesehen sein, beispielsweise jeweils in Parallelanordnung. Es ergeben sich dann beispielsweise mehrere obere Radialstreben mit parallelem, gebogenem Verlauf. Dabei ist es vorteilhaft, wenn die Zugstreben dann mit beiden Anbindungen zwischen den parallelen oberen Radialstreben verlaufen. Vorteilhaft kann die Standstruktur auch rotationssymmetrisch ausgebildet sein, sodass die Herstellung und Montage besonders erleichtert wird. Um eine Anpassung an einen besonderen Untergrund, beispielsweise eine Hanglage, oder an einen besonderen Lastfall, beispielsweise bei Gründungsstrukturen eine konstante starke Wasser- oder Windströmung, zu ermöglichen, kann vorteilhaft auch ein unsymmetrischer Aufbau der Standstruktur nach der Erfindung mit unterschiedlichen Anzahlen und Anordnungen der oberen und unteren Radialstreben und Zugelementen sowie deren jeweilige Anbindungen vorgesehen sein.

Weiterhin kann auch eine Anpassung der Standstruktur durch die Ausbildung der einzelnen Komponenten erreicht werden. Insbesondere ist es bei der Erfindung erstmals möglich und auch besonders vorteilhaft, wenn die oberen und/oder unteren Zugelemente und/oder horizontalen Zugelemente als Seile ausgeführt sind. Dies ist durch die vorherrschende Zugbelastung auf die Zugelemente im Betrieb der Standstruktur problemlos möglich, die durch die Biegebelastung auf die oberen Radialstreben unter Last ausgeübt wird. Ergibt sich nach einer kurzzeitigen außergewöhnlich starken Durchbiegung, beispielsweise durch eine außergewöhnliche Wind- oder Wellenbelastung, eine entsprechende Rückstellung der oberen Radialstreben, können die Zugelemente auch kurzzeitig auf Druck beansprucht werden. Seile werden dann biegeschlaff, behindern den Rückstellvorgang aber nicht. Ab einer bestimmten Aufbiegung der oberen Radialstreben stehen die Zugelemente aber wieder unter Zug und vermeiden sicher das Ausknicken der oberen Radialstreben. Der besondere Vorteil in der Ausführung der Zugelemente als Seile, insbesondere Stahlseile, ist in der enormen Gewichtsersparnis ohne Sicherheitsverlust zu sehen. Auch der Transport und die Montage der Gerüststruktur werden wesentlich vereinfacht.

Der Zentralpfeiler kann bevorzugt aus einem Stahlrohr bestehen, das ein- oder mehrstückig ist und eine lineare Außenkontur aufweist. Das Stahlrohr kann auch aus mehreren Stücken zusammengeschweißt sein. Alternativ kann der Zentralpfeiler auch aus einem Y-förmigen Stahlprofil bestehen. Es ergibt sich eine besondere Leichtigkeit bei gleichzeitig hoher Knickstabilität. An jeden Flügel des Y-förmigen Stahlprofils können eine obere und eine untere Radialstrebe angreifen, sodass es insgesamt drei Paare mit drei Fußelementen sind. Auch die obere Radialstrebe kann bevorzugt aus einem ein- oder mehrteiligen Stahlrohr bestehen, dessen zentrale Längsachse konvex gebogen ist. Für die Herstellung ist es besonders vorteilhaft, wenn zumindest die oberen Radialstreben aus linearen oder gebogenen Stahlrohrabschnitten mit winkligen Verbindungsbereichen ausgebildet sind. Es ergibt sich ein entsprechender Polyederringabschnitt, dessen zentrale Längsachse den für die Erfindung charakteristischen konvex gebogenen Verlauf zeigt. Bei einer solchen Polyederausbildung ist es dann weiterhin vorteilhaft, wenn die Zugelemente mit ihren äußeren Anbindungen im Bereich der winkligen Verbindungsbereiche, beispielsweise kurz darüber oder kurz darunter angeordnet sind. Ein Ausknicken der oberen Radialstreben in den Verbindungsbereichen ist dadurch sicher vermieden.

Alternativ kann die obere Radialstrebe auch aus einer Stahlplatte bestehen, die rippenförmig ausgebildet ist und ein großes Aspektverhältnis in Richtung der konvexen Krümmung aufweist, d.h. sehr viel höher als breit ist. Dadurch ergibt sich eine zusätzliche Stabilisierung der Standstruktur und eine Verringerung der Ausknickungsgefahr. Allerdings wird die Struktur auch biegesteifer gegenüber der vertikalen Verschiebungsmöglichkeit im Lastfall. Schließlich kann auch die untere Radialstrebe aus einem ein- oder mehrteiligen Stahlrohr, bestehen. Alternativ kann die untere Radialstrebe auch aus einem T-förmigen Stahlprofil bestehen, das Durchbiegungen der unteren Radialstreben in Richtung auf den Untergrund im Lastfall entgegenwirkt. Die Rohr- oder Profilauswahl beim Zentralpfeiler und bei den Radialstreben ist im Einzelnen wiederum vom Lastfall abhängig. Bei großen OWEA werden die Rohre zu bevorzugen sein, mit Ausnahme ggfs. der oberen Radialstreben, die auch gut als Platten in großer Größe ausführbar sind. Bei einer Auswahl der Rohre können der Zentralpfeiler und die Radialstreben - auch die gebogene obere Radialstrebe - noch zur weiteren Materialeinsparung bevorzugt konisch ausgeführt sein. Dabei ist die Ausführung vorteilhaft gekennzeichnet durch einen konischen Verlauf der Außenkontur des Zentralpfeilers zwischen den inneren Anbindungen der oberen und unteren Radialstrebe in Richtung auf die innere Anbindung der unteren Radialstrebe und /oder durch einen konischen Verlauf der Außenkontur der obere Radialstrebe und/oder unteren Radialstrebe in Richtung auf die Fußelemente. Bei einem konischen Verlauf verkleinert sich der Querschnitt kontinuierlich.

Weitere spezielle Details zu der Standstruktur nach der Erfindung sind dem speziellen Beschreibungsteil zu entnehmen. An dieser Stelle sei angemerkt, dass nicht ausgeführte Einzelheiten dem Fachmann aus dem Stand der Technik bekannt sind. Dabei handelt es sich beispielsweise um die Art der Gründung der Fußelemente, beispielsweise mit Fundamenten oder langen Eintriebrohren, die Art der Verbindung der einzelnen Elemente in der Standstruktur miteinander, beispielsweise Einstückigkeit, Schweißnähte, Manschetten, Muffen, Verschraubungen. Die Zugelemente in Form von Stahlseilen können an die Radialstreben und den Zentralpfeiler beispielsweise über Ösen, Manschetten oder Laschen befestigt oder auch in einer Schlaufe um diese herumgewunden werden. Die Befestigung von Zugseilen an Pfeilern und Streben ist beispielsweise aus dem Brückenbau hinlänglich bekannt.

### AUSFÜHRUNGSBEISPIELE

Die Standstruktur nach der Erfindung wird im Folgenden anhand der schematischen, nicht maßstäblichen Figuren noch weitergehend erläutert. Dabei ist die beanspruchte Standstruktur jedoch nicht auf die Ausführungsbeispiele beschränkt, insbesondere werden Ausführungsformen mit drei Fußelementen und entsprechend drei oberen und unteren Radialstreben gezeigt. Andere Ausführungsformen, beispielsweise mit vier, fünf, sechs oder mehr Fußelementen und entsprechend vier, fünf, sechs oder mehr oberen und unteren Radialstreben sind aber ebenfalls analog ausführbar. Auch ist keine Beschränkung auf eine Anwendung als Gründungstruktur für Offshore-Bauwerke gegeben. Insbesondere die schematisch gezeigten Konstruktionen können in kleiner Dimensionierung auch vorteilhaft als Strandstrukturen für elektronische Geräte auf dem Tisch-, Regal- und Fußbodenbereich als Untergrund genutzt werden.

Im Einzelnen zeigt die
- **FIGUR 1**: die Radiolarienart *Clathrocorys* aus dem Stand der Technik (prior art),
- **FIGUR 2**: eine schematische Übersicht über die Standstruktur,
- **FIGUREN 3 A..C**: eine rotationssymmetrische der Standstruktur in drei Ansichten
- **FIGUREN 4A..D**: Varianten der Standstruktur,
- **FIGUREN 5A..E**: weitere Konstruktionen für die Standstruktur,
- **FIGUR 6**: ein Detail im oberen Bereich der Standstruktur,
- **FIGUR 7**: eine perspektivische Draufsicht auf die Standstruktur und .
- **FIGUR 8**: eine perspektivische Draufsicht auf die Standstruktur in Polyederausführung mit linearen Rohrabschnitten.

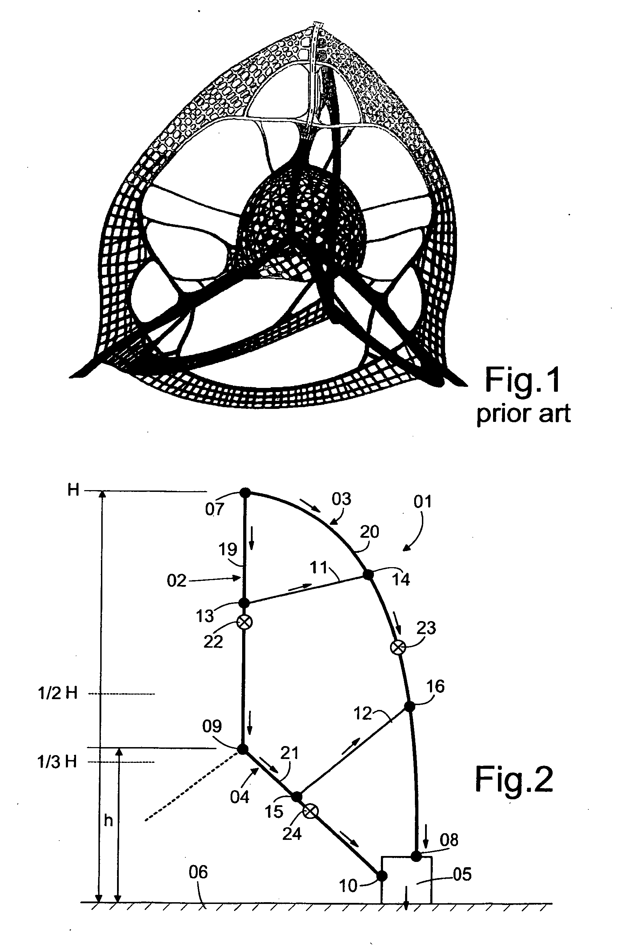

Die **FIGUR 1** zeigt die Radiolarienart *Clathrocorys* aus dem Stand der Technik. Zu erkennen sind vier zentrale Balkenelemente, die tetraedrisch verlaufen und im Zentrum von einer Kuppel umgeben sind. Zwischen allen Balkenelementen verlaufen gebogene Balken mit einer filigranen Struktur. Eine Vielzahl von Streben ist zwischen den Balkenelementen und der Kuppel angeordnet. Diese Leichtbaustruktur ist bei einem minimalen Materialeinsatz bestens geeignet, durch eine äußerst gleichmäßige Lastverteilung auch hohe Kräfte aufzunehmen.

Die **FIGUR 2** zeigt eine schematische Übersicht über die Standstruktur **01** im Ausschnitt zur Bezeichnung der grundlegenden Elemente. Dargestellt ist ein Zentralpfeiler **02** mit einer konvex gebogenen oberen Radialstrebe **03,** einer unteren Radialstrebe **04** und einem Fußelement **05** auf einem Untergrund **06.** Der Zentralpfeiler 02, die obere Radialstrebe **03** und die untere Radialstrebe **04** sind jeweils durch ihre zentralen Längsachsen **19, 20, 21** angedeutet. Gut zu erkennen ist der konvex gebogene Verlauf der zentralen Längsachse **20** des oberen Radialstrebe **03.** Die obere Radialstrebe **03** ist in einer oberen Anbindung **07** an den Zentralpfeiler **02** und in einer unteren Anbindung **08** an das Fußelement **05** angebunden. Die untere Radialstrebe **04** ist in einer oberen Anbindung **09** an den Zentralpfeiler **02** und in einer unteren Anbindung **10** an das Fußelement **05** angebunden. Weiterhin sind ein oberes Zugelement **11** und ein unteres Zugelement **12** dargestellt. Das obere Zugelement **11** ist in einer inneren Anbindung **13** an den Zentralpfeiler **02** und in einer äußeren Anbindung **14** an die obere Radialstrebe **03** angebunden. Das untere Zugelement **12** ist in einer inneren Anbindung **15** an die untere Radialstrebe **04** und in einer äußeren Anbindung **16** an die obere Radialstrebe **03** angebunden.

Die Krafteinleitung und der Kraftverlauf in der Standstruktur **01** sind in der Übersicht durch ausgezogene Pfeile angedeutet. Mögliche Verschiebungen in der Standstruktur **01** sind durch gestrichelte Pfeile angedeutet. Weiterhin sind die Mitte **22** des Zentralpfeilers **02** zwischen der oberen Anbindung **07** der oberen Radialstrebe **03** an den Zentralpfeiler **02** und der oberen Anbindung **09** der unteren Radialstrebe **04** an den Zentralpfeiler **02,** die Mitte **23** der oberen Radialstrebe **03** und die Mitte **24** der unteren Radialstrebe **04** angedeutet. Die Hohe **H** der oberen Anbindung der oberen Radialstrebe **03** an den Zentralpfeiler **02** über dem Untergrund **06** ist ebenfalls eingezeichnet. Die obere Anbindung der unteren Radialstrebe **04** an den Zentralpfeiler 02 liegt bevorzugt in einer Höhe h in einem Bereich von einem Drittel bis zur Hälfte die Höhe **H.**

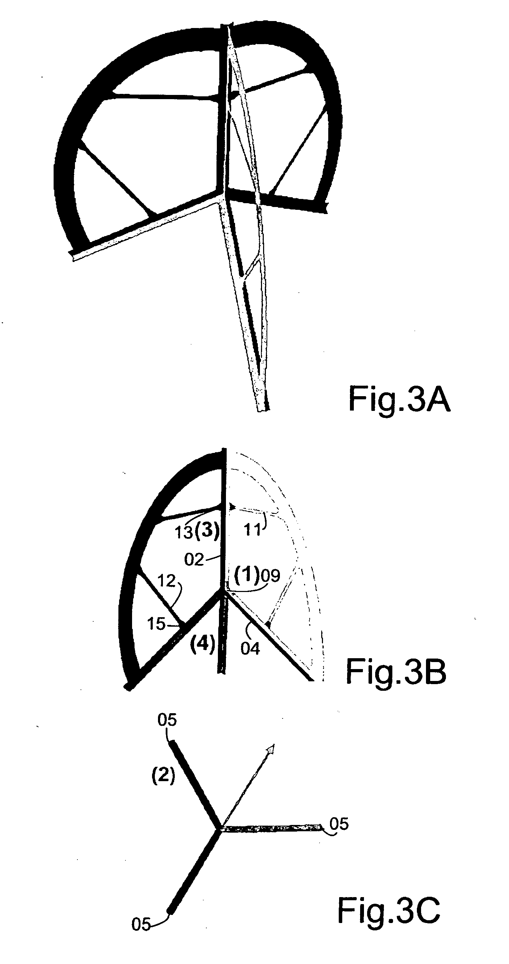

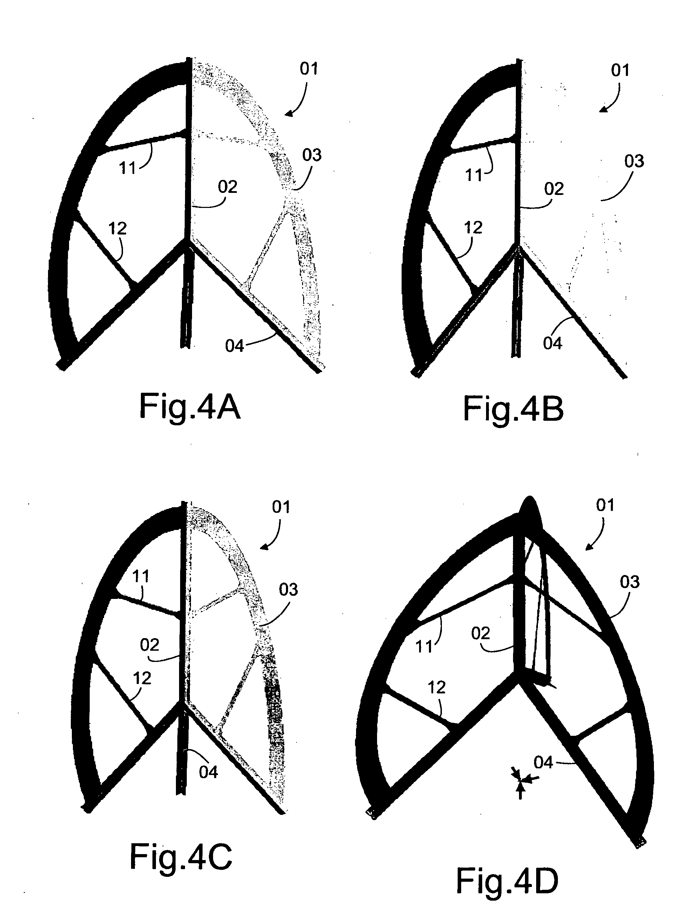

Die FIGUREN **3A****,B,C** zeigen die Konstruktionsvarianten der Standstruktur nach der Erfindung in rotationssymmetrischer Fachwerk-Ausführung **(****FIGUR 3A** in der Perspektive, FIGUR **3B** in der Seitenansicht und **FIGUR 3C** in der Draufsicht). Dargestellt sind mögliche Konstruktionsparameter (Ort der Anbindung und Radius) für eine mögliche konstruktive Anpassung der Standstruktur **01** an den relevanten Lastfall im späteren Einsatzbetrieb. Dabei handelt es sich bei (1) um die obere Anbindung **09** der unteren Radialstrebe **04** an den Zentralpfeiler **02,** (2) um den Radius des Umfangkreises, auf dem die Fußelemente **05** angeordnet sind, (3) um die innere Anbindung **13** des oberen Zugelements **11** an den Zentralpfeiler **02** und bei (4) um die innere Anbindung **15** des unteren Zugelements **12** an die untere Radialstrebe **04.** Die FIGUREN **4A****,B,C,D** zeigen mögliche konstruktive Variationen der Standstruktur **01** nach der Erfindung in diesen Parametern.

Es können bei einer Annahme von den nachfolgend genannten Extremlasten (drei translatorische, drei rotatorische Kräfte) in einer Höhe von 48 m über dem Untergrund (Fₓ -2024 kN, F_{y} -2483 kN, F_{z} -10130 kN, Mₓ 160.160 kNm, M_{y} 148.700 kNm, M_{z} -11.740 kNm) beispielsweise folgende Lagen der Anbindungen in folgenden Wertebereichen angenommen werden:

| Parameter | | über Untergrund | obere Grenze | untere Grenze |
|---|---|---|---|---|
| zentrale Anbindung | (1) | 19,40 m | + 3,90 m | - 3,90 m |
| Radius des Umfangkreises | (2) | 21,70 m | + 8,60 m | - 4,30 m |
| obere Anbindung | (3) | mittig zwischen 07 und 09 | + 5,60 m | - 5,60 m |
| untere Anbindung | (4) | mittig an 02 | + 5,70 m | - 5,70 m |
| Materialstärke * | | 0,08 m | + 0,03 m | - 0,03 m |

| | | | | |
|---|---|---|---|---|
| *offshore-tauglicher S355-Stahl (isotrop) mit einer Dichte p = 7.850 kg/m³, einem E-Modul E = 210.000 N/mm², einer Poissonzahl ν = 0,3 und einer Streckgrenze in Abhängigkeit von der Materialstärke zwischen 335 und 355 N/mm². | | | | |

Der Zentralpfeiler **02** kann aus einem Stahlrohr mit einem Durchmesser von 1750 mm bestehen. Die oberen und unteren Radialstreben **03, 04** können als Stahlrohre mit einem Durchmesser von 1422 mm ausgeführt werden. Die oberen Radialstreben **03** können auch als Stahlplatten mit einem großen Aspektverhältnis in Richtung der Durchbiegung ausgeführt, wodurch sich eine zusätzliche Sicherung gegen Ausknicken der konvex gebogenen oberen Radialstreben **03** ergibt. Gleiches gilt, wenn der Zentralpfeiler **02** und die unteren Radialstreben **04** aus Winkelstahl, beispielsweise Y-förmig (für den Zentralpfeiler **02)** oder T-förmig (für die unteren Radialstreben **04),** bestehen. Die oberen und unteren Zugelemente **11, 12** können als Stahlrohre mit einem Durchmesser von 1321 mm ausgeführt sein. Insgesamt kann sich rechnererisch für die Gründungstruktur **01** ein Gewicht zwischen 360 t und 415 t ergeben. Alternativ können auch zumindest die oberen Zugelemente **11** als Seile, insbesondere Stahlseile, Querschnitt beispielsweise 30 mm, ausgeführt sein. Dadurch kann eine weitere Gewichtsreduzierung auf einen Bereich von nur noch 300 t erreicht werden. Bei einer Last auf die Standstruktur **01** in einem Bereich von 250 t ergibt sich dabei trotzdem rechnerisch eine vertikale Verschiebungen von nur 100 mm für die Standstruktur **01** (maximal zulässig 300 mm).

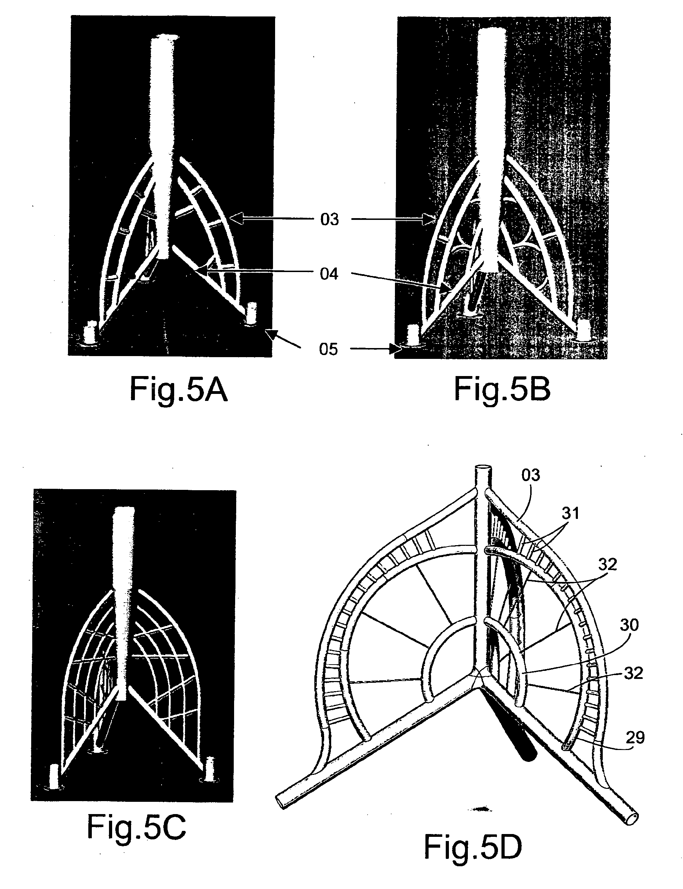

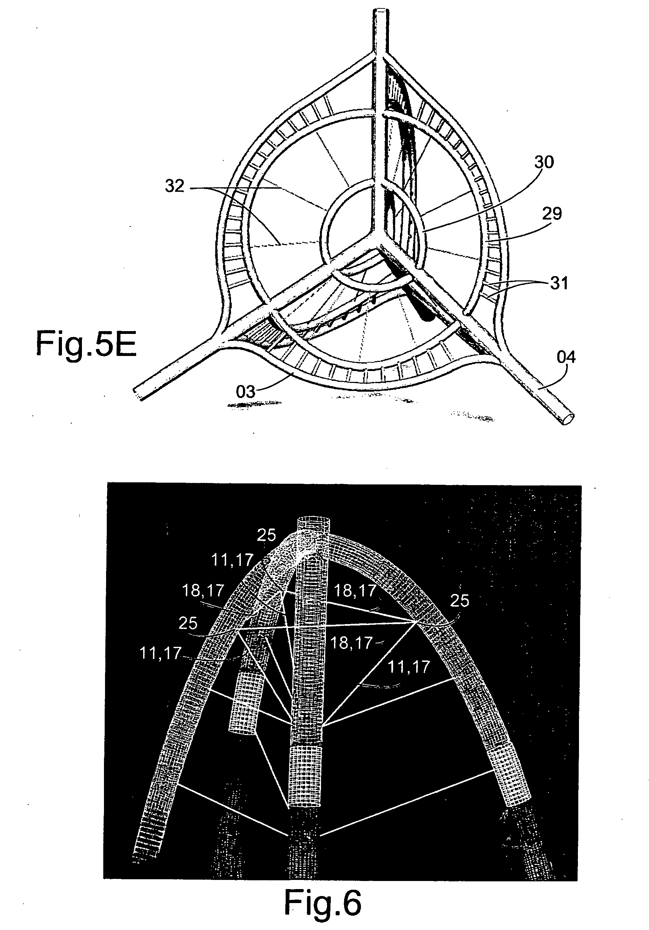

Die **FIGUR 5A****...E** zeigen schematisch weitere mögliche konstruktive Ausgestaltung der Standstruktur **01** nach der Erfindung. dabei handelt es sich um Studiendarstellungen. Als günstigste Variante hat sich die ausführlich beschriebene Ausführungsform nach *Clathrocorys* herausgestellt. Auch die Ausführungsformen gemäß **FIGUR 5A****, B, D** und **E** sind an *Clathrocorys* angelehnt, die Ausführungsform gemäß **FIGUR 5C** ähnelt der Radiolariensorte *Callimitra.*

In der **FIGUR 5A** ist eine Ausgestaltung mit jeweils zwei parallelen, konvex gebogenen oberen Radialstreben und Querstreben dazwischen dargestellt. Die **FIGUR 5B** zeigt eine Ausgestaltung mit jeweils drei parallelen, konvex gebogenen oberen Radialstreben und Querstreben dazwischen. Zu erkennen ist in dieser Ausführungsform, dass auch die Zugelemente gebogen oder verlaufen oder gegabelt sein können. In der **FIGUR 5C** ist eine Ausgestaltung mit jeweils vier parallelen, konvex gebogenen oberen Radialstreben und Querstreben dazwischen dargestellt. Die **FIGUR 5D** zeigt eine Ausgestaltung mit der konvex gebogenen oberen Radialstrebe **03,** einer zusätzlichen konvex gebogenen Radialstrebe **29** und einer inneren Radialstrebe **30,** wobei die obere Radialstrebe **03** einen größeren Bogenradius beschreibt als die zusätzliche obere Radialstrebe **29,** die wiederum einen größeren Bogen beschreibt als die innere Radialstrebe **30.** Zu erkennen sind weitere kurze Zugelemente 31 zwischen der oberen Radialstrebe **03** und der zusätzlichen oberen Radialstrebe **29** und lange Zugelemente **32,** die insbesondere als Seile ausgeführt sein können, zwischen der zusätzlichen oberen Radialstrebe **29** und der inneren Radialstrebe **30.** Neben der Vermeidung der Ausknickung der oberen Radialstrebe **03** durch die Zugelemente **31, 32** wird durch die Verbindung der Radialstreben **03, 29, 30** mit unterschiedlichem Bogenradius eine Eigenstabilität erreicht, sodass ein Ausknicken sowohl nach außen als auch nach innen erschwert wird. In der **FIGUR 5E** ist schließlich eine Ausgestaltung gemäß **FIGUR 5D** dargestellt mit einer zusätzlichen Horizontalanordnung von oberen Radialstreben **03,** der zusätzlichen oberen Radialstreben **29** und inneren Radialstreben **30** zwischen den unteren Radialstreben **04.** Die Stabilisierung erfolgt wiederum über kurze Zugelemente **31** und lange Zugelemente **32.** Eine solche Ausgestaltung ist in allen Ebenen symmetrisch aufgebaut und insbesondere sinnvoll zur zusätzlichen Stabilisierung der unteren Radialstreben **04.**

Die **FIGUR 6** zeigt ein Detail der Standstruktur **01** in deren oberen Bereich mit einer Anordnung von drei oberen Zugelementen **11** in Form von Seilen **17** und zusätzlichen horizontalen Zugelementen **18,** ebenfalls in der Ausführung von Seilen **17,** die mit ihren Anbindungen **25** zwischen den oberen Radialstreben **03** verlaufen.

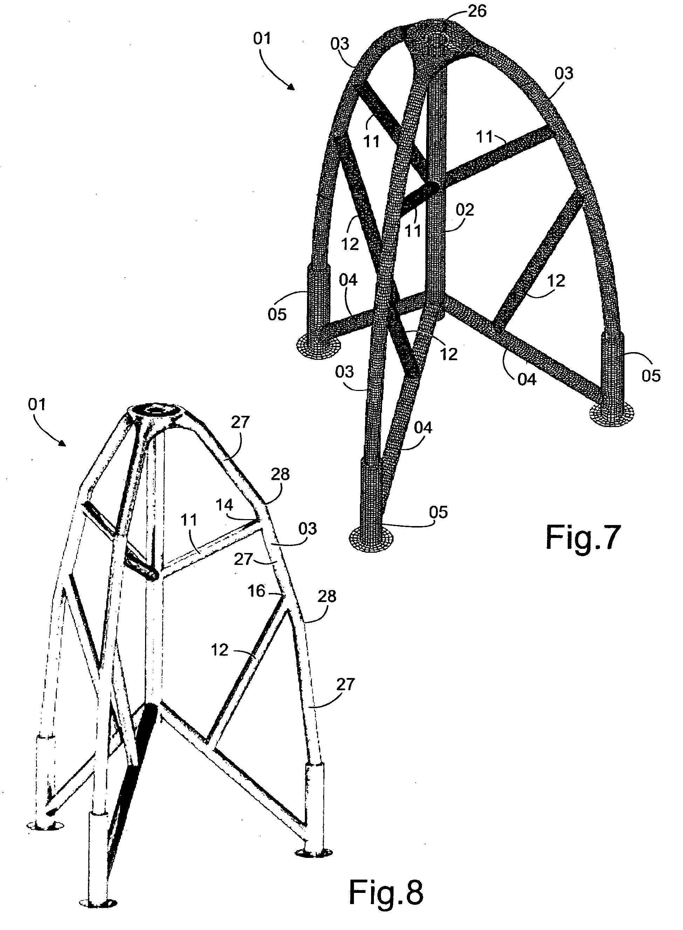

Die **FIGUR 7** zeigt in der perspektivischen Draufsicht die Standstruktur **01** nach der Erfindung in einer rotationssymmetrischen Konstruktion. Dargestellt ist der Zentralpfeiler **02** mit drei unteren Radialstreben **04.** Von einer Auflagerfläche **26** verlaufen die drei konvex gebogenen oberen Radialstreben **03** zu den Fußelementen **05,** die auch die unteren Radialstreben **04** aufnehmen. Weiterhin sind auch die oberen Zugelemente **11** und die unteren Zugelemente **12** dargestellt.

Die **FIGUR 8** zeigt eine Ausführungsform der Standstruktur **01** nach der Erfindung mit einer Ausbildung der oberen Radialstreben **03** aus linearen Stahlrohrabschnitten **27** mit winkligen Verbindungsbereichen **28.** Es ergibt sich ein ringförmiger Polyederabschnitt. Dabei sind obere und untere Zugelemente **11, 12** mit ihren äußeren Anbindungen **14, 16** im Bereich der winkligen Verbindungsbereiche **28** angeordnet.

### BEZUGSZEICHENLISTE

- **01**: Standstruktur
- **02**: Zentralpfeiler
- **03**: konvex gebogene obere Radialstrebe
- **04**: untere Radialstrebe
- **05**: Fußelement
- **06**: Untergrund
- **07**: obere Anbindung von 03 an 02
- **08**: untere Anbindung von 03 an 05
- **09**: obere Anbindung von 04 an 02
- **10**: untere Anbindung von 04 an 05
- **11**: Zugelement, oben
- **12**: Zugelement, unten
- **13**: innere Anbindung von 11 an 02
- **14**: äußere Anbindung von 11 an 03
- **15**: innere Anbindung von 12 an 04
- **16**: äußere Anbindung von 11 an 03
- **17**: Seil
- **18**: horizontales Zugelement
- **19**: zentrale Längsachse von 02
- **20**: zentrale Längsachse von 03
- **21**: zentrale Längsachse von 04
- **22**: Mitte von 02 zwischen 07 und 09
- **23**: Mitte von 03
- **24**: Mitte von 04
- **25**: Anbindung von 18 an 03
- **26**: Auflagerfläche
- **27**: Stahlrohrabschnitt
- **28**: winkliger Verbindungsbereich
- **29**: zusätzliche obere Radialstrebe
- **30**: innere obere Radialstrebe
- **31**: kurzes Zugelement
- **32**: langes Zugelement

- **H**: Höhe von 07 über 06
- **h**: Höhe von 09 über 06

## Patentansprüche

1. Standstruktur (01) mit einem vertikal ausgerichteten, nicht mit dem Untergrund (06) verbundenen Zentralpfeiler (02) mit einer oberen Auflagerfläche für eine Konstruktion, zumindest drei um den Zentralpfeiler (02) herum mit dem Untergrund (06) verbundenen Fußelementen (05) und pro Fußelement (05) mit zumindest je einer oberen Radialstrebe (03) und einer unteren Radialstrebe (04) mit jeweils einer zentralen Längsachse (120, 21) und einer oberen Anbindung (07, 09) an den Zentralpfeiler (02) und einer unteren Anbindung (08, 10) an das Fußelement (05),
**GEKENNZEICHNET DURCH**
einen an der oberen Anbindung (07) der oberen Radialstreben (03) an den Zentralpfeiler (02) beginnenden, konvex gebogenen Verlauf der zentralen Längsachsen (20) der oberen Radialstreben und eine Anordnung von zumindest einem der Kompensation von Ausknickkräften dienenden Zugelement (11, 12) für jede obere Radialstrebe (03) mit einer äußeren Anbindung (14, 16) an die obere Radialstrebe (03) und einer inneren Anbindung (13, 15) an den Zentralpfeiler (02) oder die untere Radialstrebe (04) oder an eine über das Fußelement (05) zugeordnete zusätzliche obere Radialstrebe (29).

2. Standstruktur (01) nach Anspruch 1
**GEKENNZEICHNET DURCH**
einen konvex gebogenen Verlauf der zentralen Längsachse (19) der oberen Radialstreben (03) zumindest bis zu deren Mitte (23).

3. Standstruktur (01) nach Anspruch 1
**GEKENNZEICHNET DURCH**
eine Anordnung von zumindest einem oberen Zugelement (11) mit seiner äußeren Anbindung (14) oberhalb der Mitte (23) der oberen Radialstrebe (03) und seiner inneren Anbindung (13) oberhalb der Mitte (22) des Zentralpfeilers (02) zwischen den oberen Anbindungen (07, 09) der oberen Radialstrebe (03) und der unteren Radialstrebe (04) und zumindest einem unteren Zugelement (12) mit seiner äußeren Anbindung (16) unterhalb der Mitte (23) der oberen Radialstrebe (03) und seiner inneren Anbindung (15) im Bereich der Mitte (24) der an dasselbe Fußelement (05) wie die obere Radialstrebe (03) angebundenen unteren Radialstrebe (04).

4. Standstruktur (01) nach Anspruch 1
**GEKENNZEICHNET DURCH**
eine obere Anbindung (09) der unteren Radialstrebe (04) an den Zentralpfeiler (02) in einer Höhe (h) über dem Untergrund (06) von einem Drittel bis zur Hälfte der Höhe (H) der oberen Anbindung (07) der oberen Radialstrebe (03) über dem Untergrund (06).

5. Standstruktur (01) nach Anspruch 1,
**GEKENNZEICHNET DURCH**
zusätzliche horizontale Zugelemente (18) mit beiden Anbindungen (25) zwischen den oberen Radialstreben (03) oberhalb deren Mitte (23).

6. Standstruktur (01) nach Anspruch 1,
**GEKENNZEICHNET DURCH**
mehrere obere und/oder untere Radialstreben (03, 04) pro Fußelement (05).

7. Standstruktur (01) nach Anspruch 1,
**GEKENNZEICHNET DURCH**
eine rotationssymmetrische Ausbildung der Standstruktur (01).

8. Standstruktur (01) nach Anspruch 1,
**GEKENNZEICHNET DURCH**
einen an der oberen Anbindung (09) der unteren Radialstreben (03) an den Zentralpfeiler (02) beginnenden, konvex gebogenen Verlauf der zentralen Längsachsen (21) auch der unteren Radialstreben (04).

9. Standstruktur (01) nach Anspruch 5,
**GEKENNZEICHNET DURCH**
eine Ausbildung der oberen und/oder unteren Zugelemente (11,12) und/oder horizontalen Zugelemente (18) als Seile (17), des Zentralpfeilers (02) als ein- oder mehrstückiges Stahlrohr oder Stahlprofil, der oberen Radialstrebe (03) als ein- oder mehrstückiges Stahlrohr oder Stahlplatte und/oder der unteren Radialstrebe (04) als ein- oder mehrstückiges Stahlrohr oder Stahlprofil.

10. Standstruktur (01) nach Anspruch 9,
**GEKENNZEICHNET DURCH**
eine Ausbildung der Seile (17) als Stahlseile, des Zentralpfeilers (02) als Y-förmiges Stahlprofil und/oder der unteren Radialstrebe (04) als T-förmiges Stahlprofil.

11. Standstruktur (01) nach Anspruch 9,
**GEKENNZEICHNET DURCH**
eine Ausbildung zumindest der oberen Radialstreben (03) aus linearen oder gebogenen Stahlrohrabschnitten (27) mit winkligen Verbindungsbereichen (28).

12. Standstruktur (01) nach Anspruch 11,
**GEKENNZEICHNET DURCH**
äußere Anbindungen (14, 16) der Zugelemente (11, 12) im Bereich der winkligen Verbindungsbereiche (28).

13. Standstruktur (01) nach Anspruch 1,
**GEKENNZEICHNET DURCH**
einen konischen Verlauf der Außenkontur des Zentralpfeilers (02) von den oberen Anbindungen (07) der oberen Radialstreben (03) an den Zentralpfeiler (02) zu den oberen Anbindungen (09) der unteren Radialstreben (04) und /oder einen konischen Verlauf der Außenkontur der oberen Radialstreben (03) und/oder unteren Radialstreben (04) von ihren oberen Anbindungen (07, 09) an den Zentralpfeiler (2) zu den Fußelementen (05).

## Claims

1. A stand structure (01) having a vertically aligned central column (02), which is not connected to the subsurface (06) and has an upper bearing face for a construction, at least three foot elements (05) which are connected to the subsurface (06) around the central column (02), and at least one upper radial strut (03) and one lower radial strut (04) per foot element (05), which struts each have a central longitudinal axis (120, 21) and an upper attachment (07, 09) to the central column (02) and a lower attachment (08, 10) to the foot element (05),
**CHARACTERISED BY**
a convex profile of the central longitudinal axes (20) of the upper radial struts, which profile starts at the upper attachment (07) of the upper radial struts (03) to the central column (02), and an arrangement of at least one tensile element (11, 12) for each upper radial strut (03), which arrangement acts to compensate buckling forces and has an outer attachment (14, 16) to the upper radial strut (03) and an inner attachment (13, 15) to the central column (02) or the lower radial strut (04) or to an additional upper radial strut (29) which is associated via the foot element (05).

2. The stand structure (01) according to Claim 1, **CHARACTERISED BY**
a convex profile of the central longitudinal axis (19) of the upper radial struts (03), at least as far as the centre (23) thereof.

3. The stand structure (01) according to Claim 1,
**CHARACTERISED BY**
an arrangement of at least one upper tensile element (11) with its outer attachment (14) above the centre (23) of the upper radial strut (03) and its inner attachment (13) above the centre (22) of the central column (02) between the upper attachments (07, 09) of the upper radial strut (03) and the lower radial strut (04) and at least one lower tensile element (12) with its outer attachment (16) below the centre (23) of the upper radial strut (03) and its inner attachment (15) in the region of the centre (24) of the lower radial strut (04) attached to the same foot element (05) as the upper radial strut (03).

4. The stand structure (01) according to Claim 1,
**CHARACTERISED BY**
an upper attachment (09) of the lower radial strut (04) to the central column (02) at a height (h) above the subsurface (06) of one third to one half of the height (H) of the upper attachment (07) of the upper radial strut (03) above the subsurface (06).

5. The stand structure (01) according to Claim 1,
**CHARACTERISED BY**
additional horizontal tensile elements (18) with both attachments (25) between the upper radial struts (03) above the centre (23) thereof.

6. The stand structure (01) according to Claim 1,
**CHARACTERISED BY**
a plurality of upper and/or lower radial struts (03, 04) per foot element (05).

7. The stand structure (01) according to Claim 1,
**CHARACTERISED BY**
a rotationally symmetrical configuration of the stand structure (01).

8. The stand structure (01) according to Claim 1,
**CHARACTERISED BY**
a convex profile of the central longitudinal axes (21) also of the lower radial struts (04), which profile starts at the upper attachment (09) of the lower radial struts (03) to the central column (02).

9. The stand structure (01) according to Claim 5,
**CHARACTERISED BY**
a configuration of the upper and/or lower tensile elements (11, 12) and/or horizontal tensile elements (18) as cables (17), of the central column (02) as a single- or multi-part steel tube or steel profile, of the upper radial strut (03) as a single- or multi-part steel tube or steel plate and/or of the lower radial strut (04) as a single- or multi-part steel tube or steel profile.

10. The stand structure (01) according to Claim 9,
**CHARACTERISED BY**
a configuration of the cables (17) as steel cables, of the central column (02) as a Y-shaped steel profile and/or of the lower radial strut (04) as a T-shaped steel profile.

11. The stand structure (01) according to Claim 9,
**CHARACTERISED BY**
formation of at least the upper radial struts (03) from linear or curved steel tube sections (27) having angled connection regions (28).

12. The stand structure (01) according to Claim 11,
**CHARACTERISED BY**
outer attachments (14, 16) of the tensile elements (11, 12) in the region of the angled connection regions (28).

13. The stand structure (01) according to Claim 1,
**CHARACTERISED BY**
a conical profile of the outer contour of the central column (02) from the upper attachments (07) of the upper radial struts (03) to the central column (02) as far as the upper attachments (09) of the lower radial struts (04) and/or a conical profile of the outer contour of the upper radial struts (03) and/or lower radial struts (04) from their upper attachments (07, 09) to the central column (2) as far as the foot elements (05).

## Revendications

1. Structure verticale (01) comprenant un pilier central (02) aligné verticalement, non relié au support (06) comprenant une face d'appui supérieure pour une construction, au moins trois éléments de pied (05) reliés au support (06) répartis autour du pilier central (02) et par élément de pied (05) avec au moins une branche radiale supérieure (03) et une branche radiale inférieure (04) avec respectivement un axe longitudinal central (120, 21) et une liaison supérieure (07, 09) sur le pilier central (02) et une liaison inférieure (08, 10) sur l'élément de pied (05),
**caractérisée par**
un tracé convexe des axes longitudinaux centraux (20) des branches radiales supérieures, commençant sur la liaison supérieure (07) des branches radiales supérieures (03) sur le pilier central (02), et un agencement d'au moins un élément de traction (11, 12) servant à compenser des forces de flambage pour chaque branche radiale supérieure (03) avec une liaison extérieure (14, 16) à la branche radiale supérieure (03) et une liaison intérieure (13, 15) au pilier central (12) ou à la branche radiale inférieure (04) ou une branche radiale supérieure supplémentaire (29) agencée sur l'élément de pied (05).

2. Structure verticale (01) selon la revendication 1, **caractérisée par** un tracé convexe de l'axe longitudinal central (19) des branches radiales supérieures (03), au moins jusqu'à leur centre (23).

3. Structure verticale (01) selon la revendication 1, **caractérisée par** un agencement d'au moins un élément de traction supérieur (11) avec sa liaison extérieure (14) au-dessus du centre (23) de la branche radiale supérieure (03) et sa liaison intérieure (13) au-dessus du centre (22) du pilier central (02) entre les liaisons supérieures (07, 09) de la branche radiale supérieure (03) et de la branche radiale inférieure (04), et d'au moins un élément de traction inférieur (12) avec sa liaison extérieure (16) en-dessous du centre (23) de la branche radiale supérieure (03) et sa liaison inférieure (15) au niveau du centre (24) de la branche radiale inférieure (04) reliée à ce même élément de pied (5) comme la branche radiale supérieure (03).

4. Structure verticale (01) selon la revendication 1, **caractérisée par** une liaison supérieure (09) de la branche radiale inférieure (04) sur le pilier central (02) à une hauteur (h) au-dessus du support (06) d'un tiers jusqu'à la moitié de la hauteur (H) de la liaison supérieure (07) de la branche radiale supérieure (03) au-dessus du support (06).

5. Structure verticale (01) selon la revendication 1, **caractérisée par** des éléments de traction (18) horizontaux supplémentaires avec deux liaisons (25) entre les branches radiales supérieures (03) au-dessus de leur centre (23).

6. Structure verticale (01) selon la revendication 1, **caractérisée par** plusieurs branches radiales supérieures et/ou inférieures (03, 04) par élément de pied (05).

7. Structure verticale (01) selon la revendication 1, **caractérisée par** une formation symétrique en rotation de la structure verticale (01).

8. Structure verticale (01) selon la revendication 1, **caractérisée par** un tracé convexe des axes longitudinaux centraux (21) également des branches radiales inférieures (04), commençant sur la liaison supérieure (09) des branches radiales supérieures (03) sur le pilier central (02).

9. Structure verticale (01) selon la revendication 5, **caractérisée par** une formation des éléments de traction supérieur et/ou inférieur (11, 12) et/ou des éléments de traction horizontaux (18) en tant que câbles (17), du pilier central (02) en tant que tube d'acier ou profilé d'acier en une seule pièce ou en plusieurs pièces, de la branche radiale supérieure (03) en tant que tube d'acier ou profilé d'acier en une seule pièce ou en plusieurs pièces et/ou de la branche radiale inférieure (04) en tant que tube d'acier ou profilé d'acier en une seule pièce ou en plusieurs pièces.

10. Structure verticale (01) selon la revendication 9, **caractérisée par** une formation des câbles (17) en tant que câbles d'acier, du pilier central (02) en tant que profilé d'acier en Y et/ou de la branche radiale inférieure (04) en tant que profilé d'acier en T.

11. Structure verticale (01) selon la revendication 9, **caractérisée par** une formation au moins de la branche radiale supérieure (03) en tronçons de tube d'acier (27) linéaires ou coudés avec des zones de liaison angulaires (28).

12. Structure verticale (01) selon la revendication 11, **caractérisée par** des liaisons extérieures (14, 16) des éléments de traction (11, 12) au niveau des zones de liaison angulaires (28).

13. Structure verticale (01) selon la revendication 1, **caractérisée par** un tracé conique du contour extérieur du pilier central (02) depuis les liaisons supérieures (07) des branches radiales supérieures (03) sur le pilier central (02) vers les liaisons supérieures (09) des branches radiales inférieures (04) et/ou un tracé conique du contour extérieur des branches radiales supérieures (03) et/ou des branches radiales inférieures (04) depuis leurs liaisons supérieures (07, 09) sur le pilier central (02) vers les éléments de pied (05).
